**Europäisches Patentamt**

**European Patent Office**

**Office européen des brevets**

(11) Veröffentlichungsnummer: **0 162 339**

**A1**

(12) ## EUROPÄISCHE PATENTANMELDUNG

(21) Anmeldenummer: **85105150.8**

(22) Anmeldetag: **26.04.85**

(51) Int. Cl.⁴: **C 02 F 3/30**
**C 02 F 3/08**

(30) Priorität. **27.04.84 DE 3415756**

(43) Veröffentlichungstag der Anmeldung:
**27.11.85 Patentblatt 85/48**

(84) Benannte Vertragsstaaten:
**DE**

(71) Anmelder: **Dr.-Ing. Werner Weber**
**Ingenieur-Gesellschaft mbH**
**Bleichstrasse 19-21**
**D-7530 Pforzheim(DE)**

(72) Erfinder: **Weber, Werner, Dr.-Ing.**
**Schauinslandstrasse 20**
**D-7531 Kieselbronn(DE)**

(72) Erfinder: **Lang, Hans, Ing. (grad.)**
**Parkstrasse 18**
**D-7530 Pforzheim(DE)**

(74) Vertreter: **Heusler, Wolfgang, Dipl.-Ing. et al,**
**Von Bezold, Dieter, Dr. Schütz, Peter, Dipl.-Ing. Heusler,**
**Wolfgang, Dipl.-Ing. Maria-Theresia-Strasse 22 Postfach**
**860 260**
**D-8000 München 86(DE)**

(54) **Verfahren und Vorrichtung zur biologischen Behandlung von Abwasser.**

(57) In einer Belebungsanlage mit mindestens einem Becken durchströmt das mit Belebtschlamm gemischte Abwasser die Durchgänge einer Festbettanordnung, in der in einem weitgehend anoxischen Bereich der Anlage mit Hilfe des sessilen Schlamms der Festbettanordnung eine Denitrifikation der zuvor durch Nitrifikation in einem oxischen Bereich der Anlage entstandenen Stoffe durchgeführt wird. Man kann entweder das Abwasser-Schlamm-Gemisch aus dem oxischen Bereich direkt durch die Festbettanordnung innerhalb desselben Belebungsbeckens strömen lassen oder stattdessen die Nitrifikation und Denitrifikation in getrennten oxischen bzw. annoxischen Becken durchfuhren In Vorrichtungen zum Durchfuhren des Verfahrens kann die Festbettanordnung (5) an einer von einem Motor (14) angetriebenen fahrbaren Brucke (4) oder sonstigen bewegbar gefuhrten Halterungen montiert sein.

EP 0 162 339 A1

./...

Fig.1

0162339

11758/EP
H/Elf

Dr.-Ing.Werner Weber Ingenieur-
Gesellschaft mbH
7530 Pforzheim

Verfahren und Vorrichtung zur biologischen
Behandlung von Abwasser

Die Erfindung betrifft ein Verfahren gemäß dem Oberbegriff des Anspruchs 1 sowie eine Vorrichtung zur Durchführung dieses Verfahrens.

Eine bekannte Vorrichtung dieser Gattung (DE-PS 29 01 509) arbeitet im Gegensatz zu der einheitlichen Schlammstruktur herkömmlicher Belebtschlammverfahren mit zwei unterschiedlich strukturierten Schlämmen, nämlich einerseits dem üblichen freischwebend in Mischung mit dem Abwasser zirkulierenden Schlamm und andererseits mit festgewachsenem (sessilem) Schlamm auf die Festbettanordnung bildenden Beckeneinbauten mit einem Anteil von z.B. 30% oder mehr am gesamten Schlamm. Der sessile Schlamm erhöht also die Gesamtschlamm-Menge ohne zusätzliche Belastung eines ggf. vorhandenen Nachklärbeckens und ist an sich in hervorragender Weise zur Nitrifikation geeignet. Durch die langen Aufwuchszeiten an den Wänden der Beckeneinbauten entsteht ein hohes Schlammalter, das für nitrifizierende Bakterien eine gute Voraussetzung ist. Die erforderliche Strömung wird bei der bekannten Vorrichtung durch unterhalb der vertikalen Kanäle eingeblasene Luft angetrieben, die zugleich den für die Nitrifikation erforderlichen Sauerstoff liefert. Strömungshindernisse beispielsweise in Form von zickzackförmigen Schikanen erhöhen an den Berührungsflächen die Kontaktzeiten und sorgen für eine geringe Turbulenz, die für guten Kontakt mit dem sessilen Schlamm erwünscht ist, ohne dessen Alterung durch Ablösung zu stören. Außerdem vermeidet die Vorrichtung die bei anderen bekannten Belebtschlammanlagen auftretende Gefahr des Zusetzens der Beckeneinbauten.

Die bekannte Vorrichtung eignet sich aber nicht für ein zweistufiges Verfahren mit sich an die Nitrifikation anschließender Denitrifikation, die in an sich bekannter Weise ebenfalls durch Bakterien des Belebtschlamms in einer anoxischen Zone erfolgen soll mit dem Ziel einer weitgehenden Stickstoffelimination (mikrobielle Reduktion des Nitratstickstoffes zu elementarem Stickstoff) und gleichzeitiger Nutzbarmachung des bei der Nitrifikation verbrauchten Sauerstoffs zum Abbau von Kohlenstoff und sonstigen organischen Schmutzstoffen ("Korrespondenzabwasser" 3/84, 167-170). Bei der bekannten Belebungsanlage führt eine interne Rücklaufleitung von der oxischen (aeroben) Nitrifikationszone am Ablaufende des Belebungsbeckens zu der anoxischen Denitrifikationszone in der Nähe des Zulaufs. Da der anoxischen Zone mit dem Zulauf aus der oxischen Zone stets Sauerstoff zugeführt wird, war es bisher schwierig, in dem freischwebenden Schlamm die erforderlichen anoxischen Betriebsverhältnisse kurzfristig herzustellen. In den relativ kurzen Durchflußzeiten wird das für die Tätigkeit der denitrifizierenden Bakterien erforliche Sauerstoffdefizit nicht oder nur unzureichend erreicht.

Der Erfindung liegt die Aufgabe zugrunde, bei einem mit einem Festbett arbeitenden Verfahren bzw. einer entsprechenden Vorrichtung mit geringem Aufwand eine sehr wirkungsvolle Denitrifikation zu erreichen.

Diese Aufgabe wird durch das im Anspruch 1 gekennzeichnete Verfahren gelöst.

Die Erfindung beruht auf der Erkenntnis, daß der sessile Schlamm in einer Festbettanordnung, der bisher nur zur Nitrifikation genutzt wurde, auch eine sich an die Nitrifikation anschließende Denitrifikation fördern kann. Die hierfür benötigten Bakterien können in dem Schlamm ebenso wie die nitrifizierenden Bakterien existieren und werden aktiv , sobald man für Sauerstoffdefizit in und an den Kanälen der Beckeneinbauten oder sonstigen (z.B. freischwebenden) Festbettanordnungen sorgt, wobei sie den in dem vorbeiströmenden Gemisch enthaltenden Nitraten bzw. Stickoxiden den Sauerstoff entziehen. Der dadurch entstehende elementare Stickstoff kann als Gas entweichen, während der "veratmete" Sauerstoff zum Schmutzstoffabbau nutzbar gemacht wird. Die wesentlichen Vorteile der Denitrifikation durch Bakterien im sessilen Schlamm gegenüber dem bekannten Verfahren ohne Festbettanordnung sind größere Effizienz und Betriebsstabilität , die darauf beruhen, daß sich einerseits die erforderlichen anoxischen Betriebsverhältnisse in dem vom Abwassergemisch durchströmten bewachsenen Festbett schneller einstellen können als im freien Becken und andererseits die für möglichst schnellen Sauerstoffverbrauch zur Verfügung stehende Gesamtschlammmenge erheblich größer ist. Die sessilen Bakterien sind für eine gewisse Lebensdauer in ihrer Gesamtheit verfügbar und verbleiben stets im anoxischen Milieu. Der freischwebende Schlamm dagegen durchläuft in einem ständigen Kreislauf abwechselnd oxische und anoxische Bereiche; dieser Wechsel der Umweltbedingungen führt beim Übergang zum anderen Milieu zu Anpassungsschwierigkeiten , die die schon erwähnte Verzögerung der Denitrifikation verursachen.

Wegen des höheren Schlammgehalts ergibt sich auch ein gesteigerter Abbau von Kohlenstoff und sonstigen Schmutzstoffen mit Hilfe der denitrifizierenden Bakterien.

Anhand der Zeichnung wird die Erfindung im folgenden näher erläutert. Es zeigen:

Fig. 1    als erstes Ausführungsbeispiel ein Belebtschlammbecken mit horizontal bewegten Einbauten;

Fig. 2    ein zweites Ausführungsbeispiel mit vertikal bewegten Einbauten; und

Fig. 3    ein drittes Ausführungsbeispiel mit oxischen bzw. anoxischen Zonen in getrennten Becken.

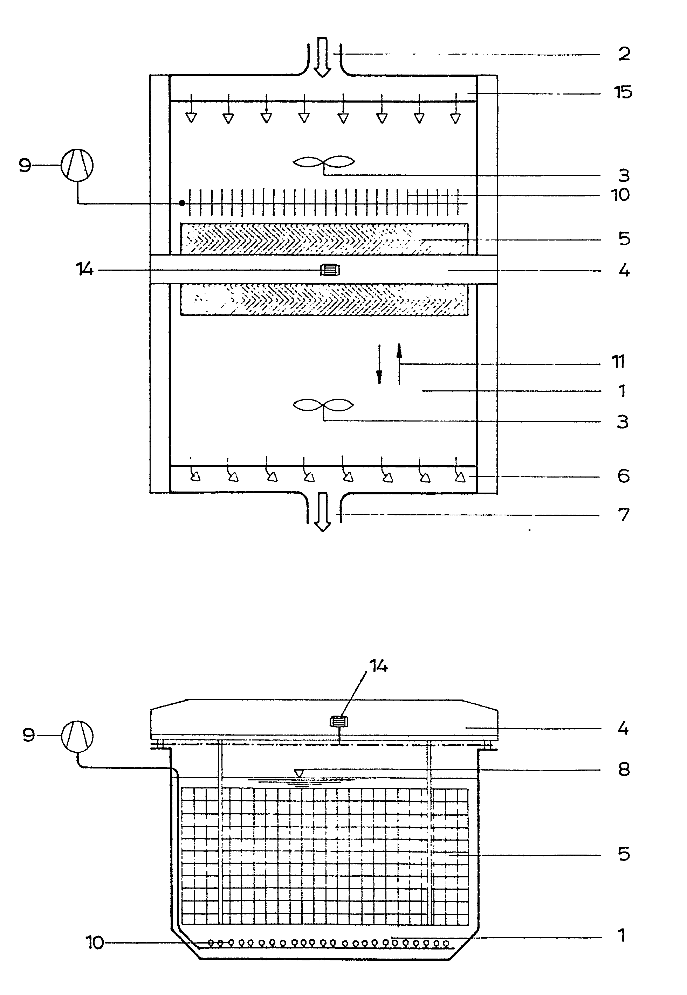

Das zu behandelnde, mit Belebtschlamm gemischte Abwasser fließt durch eine Zulaufleitung 2 ggf. über einen Rand 15 in das gemäß Fig. 1 reckteckige Belebtschlammbecken oder Belebungsbecken 1, in dem sich ein durch die Höhe eines Überlaufs 6 gegebener (druckloser) Wasserspiegel 8 einstellt. Durch eine Ablaufleitung 7 verläßt das behandelte Abwasser das Belebungsbecken 1. Da sich Zulauf und Ablauf an den Stirnenden des Belebungsbeckens 1 befinden, fließt das Wasser in Längsrichtung durch das Becken.

Unterhalb des Wasserspiegels 8 sind in dem Belebungsbecken 1 die Beckeneinbauten 5 angeordnet, die aus blockweise zusammengefügten Kunststoffkörpern mit einer Vielzahl paralleler Durchgänge bestehen. In der aus der DE-PS 29 01 509 bekannten Weise können diese Durchgänge Kanäle sein, deren Wände zickzackförmig verlaufen und dadurch Strömungshindernisse (Schikanen) bilden. Stattdessen könnte der Block der Beckeneinbauten 5 aber auch aus andersartigen Kunststoffkörpern bestehen, insbesondere aus einer Vielzahl von an ihren Außenseiten miteinander verschweißten zylindrischen Rohren, deren Wände zur Bildung von Strömungshindernissen perforiert sein können. Die Beckeneinbauten 5 tragen bekanntlich in ihrem Inneren den mindestens drei, vorzugsweise mehr als zwanzig Tage alten sessilen Schlamm, der die für die Behandlung erforderlichen Bakterien enthält.

Bei dem hier beschriebenen Beispiel sind die Beckeneinbauten 5 mit horizontal liegenden Kanälen angeordnet, deren allgemeine Längsrichtung in Fig. 1 parallel zur Längsrichtung des rechteckigen Belebungsbeckens 1 verläuft. Dadurch ergibt sich die Möglichkeit, eine horizontale Strömung durch die Beckeneinbauten 5 zu erzeugen. Zu diesem Zweck hängen die Beckeneinbauten 5 an einer in der Längsrichtung fahrbar über dem Belebungsbecken 1 angeordneten, von einem Motor 14 angetriebenen Brücke 4. Zweckmässig kann die Brücke mit auf den Längsrändern des Beckens laufenden Rollen versehen sein. Durch langsames Hin- und Herfahren der Brücke 4 in Richtung der Pfeile 11 mit Hilfe des selbsttätig zyklisch umgesteuerten Motors 14 strömt das Abwasser-Schlammgemisch in der gewünschten Weise in entsprechend wechselnder Richtung durch die Kanäle der Kunststoffkörper, wobei an den Bewegungsumkehrpunkten jeweils eine kurze Pause des Motors zweckmässig sein kann. Die Bewegungs- bzw. Strömungsgeschwindigkeit kann beispielsweise in der Größenordnung von 5 bis 50 mm /sek betragen.

Unter Umständen kann die Längsachse der Kanäle der Beckeneinbauten 5 von der horizontalen Bewegungsrichtung bzw. der allgemeinen Strömungsrichtung nach der Seite und/oder Höhe um bis zu 45° oder mehr abweichen. Dadurch kann die Durchmischung verbessert werden, und im Falle einer nicht genau horizontalen Anordnung kann die Mammutpumpenwirkung (Auftrieb) von ggf. im Wasser vorhandenen Gasblasen zur Förderung des Hohlkörperinhalts genutzt werden.

-6-                                    **0162339**

Die Nitrifikation, d.h. die Oxidation des durch bakteriologische Zersetzung von stickstoffhaltigen Substanzen
entstehenden Ammoniaks bzw. Ammoniums zu Nitrat mit Hilfe
von aeroben Bakterien erfolgt bei dem Ausführungsbeispiel
der Fig. 1 auf der Zulaufseite des Belebungsbeckens. Der
für die Nitrifikation erforderliche Sauerstoff wird in
dieser oxischen oder aeroben Zone durch am Boden des
Belebungsbeckens angeordnete, von einem Gebläse 9 gespeiste Belüftungsdiffuser 10 eingetragen. Die aus dem
Diffuser austretenden Luftblasen, die zugleich das Absetzen von Schlamm verhindern, sollen möglichst klein
sein. Die Nitrifikation kann hauptsächlich im freien
Schlamm des Abwassergemisches erfolgen, bis zu einem
gewissen Grad aber auch in bekannter Weise durch sessile
nitrifizierende Bakterien in den Beckeneinbauten 5 ,wenn
diese sich bei ihrer zyklischen Bewegung in dem belüfteten Bereich des Beckens befinden.

Wenn die Beckeneinbauten aus dem Bereich des Diffusers 10
in Richtung des Überlaufs 6 bewegt werden, also in einen
Beckenbereich, der bei dem dargestellten Beispiel unbelüftet ist, bilden sich im Inneren der Beckeneinbauten
sehr schnell vollkommen anoxische Betriebsverhältnisse.
Von den Denitrifikanten im freien Schlamm und vor allem
im sessilen Schlamm wird zunächst der in den Beckeneinbauten ggf. noch vorhandene freie Sauerstoff verbraucht und sodann der von ihnen veratmete Sauerstoff
zwangsweise den Nitraten im Abwassergemisch entzogen.
Durch den Sauerstoffverbrauch wird für die gewünschte
Freisetzung des elementaren Stickstoffs gesorgt, der als
Gas entweicht.

Da im Inneren der Beckeneinbauten 5 je nach den Betriebsbedingungen auch im Bereich über dem Diffuser 10 ein Sauerstoffdefizit herrschen kann, ist eine Denitrifikation weitgehend unabhängig vom jeweiligen Ort der Beckeneinbauten möglich, der deshalb auch in bezug auf den Ort des Sauerstoffeintrags nicht zwingend kritisch ist. Im übrigen können die Beckeneinbauten 5 je nach der gewünschten Verfahrensweise auch nur in dem Bereich außerhalb des Diffusers 10 liegenden Teil des Belebungsbeckens 1 bewegt werden. Die Geschwindigkeit ist normalerweise konstant, sie kann aber wechselnd und pulsierend sein.

Die in der Zeichnung nur schematisch dargestellten Propeller 3, die im Belebungsbecken 1 ausreichend tief unter dem Wasserspiegel 8 auf in Längsrichtung der Kanäle der Beckeneinbauten 5 liegenden Achsen gelagert sind, können während des normalen Betriebes abgeschaltet sein. Wenn in besonderen Fällen die sessilen Schlammanlagerungen verringert oder beseitigt werden sollen, erlauben sie jedoch ein Spülen der Beckeneinbauten 5 durch Erzeugung einer gegenüber dem Normalbetrieb wesentlich stärkeren Strömung durch die horizontalen Kanäle. Vorzugsweise wird die Spülung abwechselnd in den beiden entgegengesetzten Richtungen der Pfeile 11 durchgeführt. Die Propeller können gemäß Fig. 1 ortsfest außerhalb des Bewegungsbereiches der Beckeneinbauten 5 angeordnet oder ebenfalls an der fahrbaren Brücke 4 befestigt sein. Anstelle der Propeller 3 könnte man auch beliebige andere Wasserfördereinrichtungen mit horizontaler Förderrichtung vorsehen. Die Propeller 3 oder sonstige Wasserfördereinrichtungen können so montiert sein, daß die Förderrichtung zur Seite nach oben oder unten gegen die horizontale Längsrichtung geneigt oder entsprechend veränderbar ist. Zum Spülen kann man auch die Bewegungsgeschwindigkeit der Beckeneinbauten erhöhen.

Unter Umständen besteht die Möglichkeit, auch die im Normalbetrieb erforderliche Horizontalströmung durch einen oder mehrere entsprechend angeordnete Propeller oder sonstige Wasserfördereinrichtungen statt durch Bewegung der Beckeneinbauten 5 zu erzeugen. In anderen Fällen kann die Strömung durch derartige Einrichtungen zusätzlich zu einer Bewegung der Beckeneinbauten unterstützt werden.

Statt des in Fig. 1 dargestellten rechteckigen Beckens kann das beschriebene Verfahren auch in einem runden Becken mit kontinuierlicher Kreisbewegung der Beckeneinbauten und/oder der Abwasserströmung durchgeführt werden.

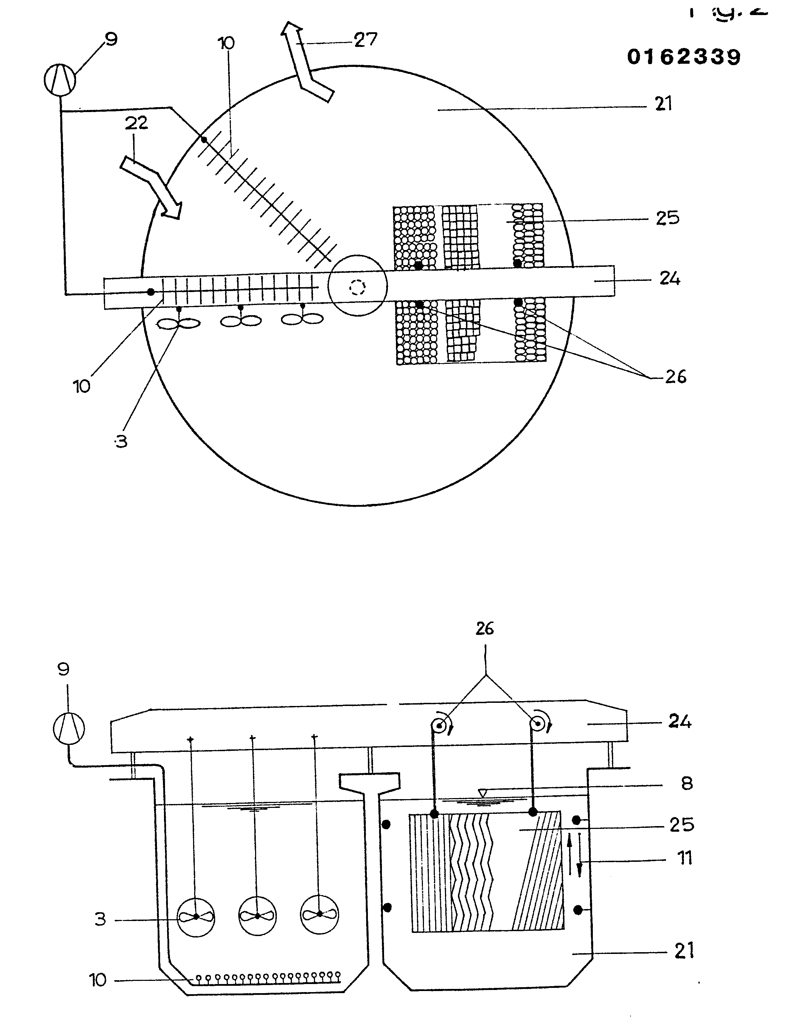

Ferner können statt der dargestellten horizontalen Beckeneinbauten solche mit vertikal durchströmten Kanälen verwendet werden, wie in Fig. 2 gezeigt ist. Hier wird das Belebtschlamm-Abwasser-Gemisch an der Stelle 22 in ein rundes Belebungsbecken 21 eingeleitet, an der Stelle 27 abgeleitet und durch Propeller 3 in kreisender Bewegung in dem Becken gehalten. Die Propeller 3 sind an einer Brücke 24 befestigt, an der ferner Festbetten 25 aufgehängt sind, die von dem Abwasser-Schlamm-Gemisch senkrecht durchflossen sind. Die Festbetten 25 sind beispielhaft mit wahlweise verwendbaren unterschiedlichen Durchgängen für das Abwasser-Schlamm-Gemisch dargestellt. Durch vier Hubvorrichtungen 26 wird der als Block dargestellte Festbettkörper längs der Pfeile 11 so auf und ab bewegt, daß sich in den aufsteigenden Durchgängen ein Pumpeffekt ergibt, der erstens bewirkt, daß die Durchgänge durchflossen werden, und zweitens , daß sie nicht verstopfen.

In einem anderen Teil des Beckens 21 sind Diffuser 10 angeordnet, mit denen Luft in das Becken eingetragen wird, die durch eine Pumpe oder das Gebläse 9 gefördert wird. In dem Becken 21 ergibt sich eine oxische Zone im Bereich der Diffuser und eine anoxische Zone im Bereich des Festbetts.

Bei der in Fig. 2 dargestellten Verfahrensweise wird also
die Nitrifikation durch freischwebende Bakterien bewirkt
und die Denitrifikation durch festsitzende (sessile)
Bakterien.

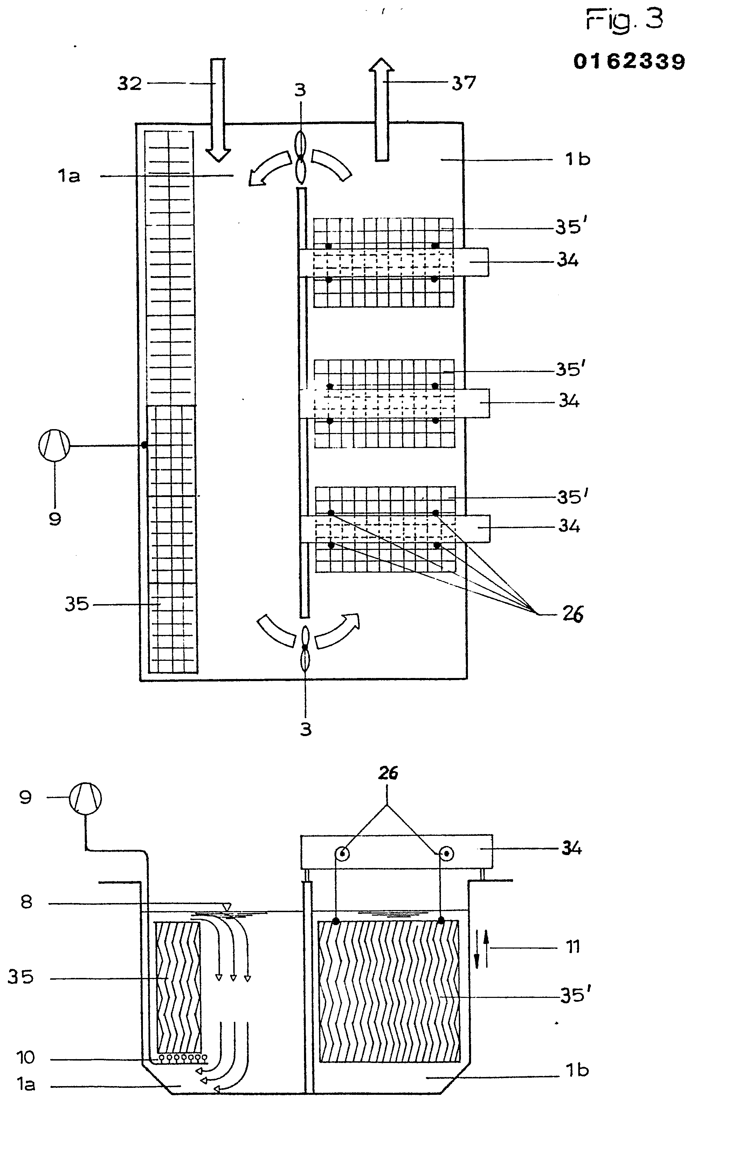

Die simultane Nitrifikation und Denitrifikation in ein
und demselben Becken z.B. gemäß Fig. 1 kann besonders dann
sinnvoll sein, wenn die Belebungsanlage relativ groß
und nicht zu stark durch Abwasser belastet ist (relativ
schwach ist z.B. eine Raumbelastung von 0,2 kg $BSB_5$/m³/Tag).
Bei relativ kleinen Becken und/oder größerer Belastung
wird eine Denitrifikation dagegen schwieriger, während
die Nitrifikation bei ausreichender Belüftung einfacher
erreichbar ist. In solchen Fällen kann daher eine Nitrifikation und Denitrifikation in voneinander getrennten
Becken einer Belebungsanlage zweckmässiger sein, wie sie
in Fig. 3 dargestellt ist.

In Fig. 3 ist in einem rechteckigen Belebungsbecken 1a
eine oxische Zone eingereicht und in einem zweiten rechteckigen Belebungsbecken 1b eine anoxische Zone. Die beiden
Belebungsbecken sind darstellungsgemäß benachbart und
durch seitliche Durchlässe verbunden, in denen sich Propeller 3 befinden. Das Abwasser-Schlamm-Gemisch fließt
an der Stelle 32 in das oxische Becken ein. Eine Luftpumpe oder das Gebläse 9 stellt die Druckluft für die
Diffuser 10 zur Verfügung. Das Abwasser-Schlamm-Gemisch
wird durch Festbetten 35 hindurchgepumpt, wobei in an sich
bekannter Weise eine Nitrifikation erreicht wird. Das Abwasser-Schlamm-Gemisch fließt dann anschließend in das
Becken 1b. Hier wird in einem anoxischen Milieu die Denitrifikation erreicht. Sie wird gefördert durch sessile
Bakterien, die in Festbetten 35' vorhanden sind; außerdem sind freischwebende Bakterien eingesetzt. Wie bei dem
System nach Fig. 2 sind an einer Brücke 34 über den einzelnen Festbetten jeweils Hubvorrichtungen 26 angebracht, die die Festbetten 35' auf und ab bewegen in Richtung der Pfeile 11. Durch die Auf- und Abbewegung wird bewirkt, daß die Durchgänge der Festbetten durchflossen werden, und daß eine solche hohe Durchflußgeschwindigkeit erzeugt wird, daß sich ein Zusetzen der Festbetten nicht ergeben kann. Nach Durchfluß durch das Becken 1b verläßt an der Stelle 37 ein Teilstrom das Denitrifikationsbecken; ein anderer Teilstrom fließt in das Nitrifikationsbecken zurück.

Bei den dargestellten Beispielen werden als Festbettanordnung feste Beckeneinbauten bzw. horizontal oder vertikal durch das Becken bewegte Blöcke aus fest miteinander verbundenen Kunststoffkörpern od. dgl. verwendet. Eine (nicht dargestellte) Alternativmöglichkeit ist die Verwendung einer Festbettanordnung, die aus kleinen freischwebend im Abwassergemisch verteilten porösen Schwimmkörpern (Schaumstoff) oder hohlen Formstücken gebildet ist. Diese Schwimm- oder Schwebekörper können zweckmässig in einem oder mehreren im Belebungsbecken angeordneten Käfigen gehalten werden. Die Käfige können zum Spülen der Schwebekörper hin und her und/oder auf und ab bewegt werden.

Eine weitere (ebenfalls nicht dargestellte) Möglichkeit der Bewegung einer Festbettanordnung in dem Belebungsbecken ist eine für das Abwasser-Schlamm-Gemisch durchlässige rotierende Trommel, die z.B. mit porösen oder hohlen Körpern gefüllt oder aus einzelnen Scheiben gebildet sein kann.

Patentansprüche:

1.    Verfahren zur biologischen Behandlung von Abwasser
in einer Belebungsanlage mit mindestens einem Becken,
in welchem das mit Belebtschlamm gemischte Abwasser Durchgänge einer Festbettanordnung durchströmt, die sessile
Schlammanlagerungen trägt , wobei in einem oxischen Bereich der Anlage, in den Sauerstoff eingetragen wird, eine
Nitrifikation erfolgt,

d a d u r c h   g e k e n n z e i c h n e t, daß in
einem weitgehend anoxischen Bereich der Anlage eine Denitrifikation der durch die Nitrifikation entstandenen
Stoffe mit Hilfe des sessilen Schlamms im Inneren der
Festbettanordnung durchgeführt wird.

-2-                                    0162339

2.   Verfahren nach Anspruch 1 , d a d u r c h   g e -
k e n n z e i c h n e t , daß man das Abwasser-Schlamm-
gemisch aus dem oxischen Bereich innerhalb des Belebungsbeckens direkt durch die Festbettanordnung strömen läßt.

3.   Verfahren nach Anspruch 1 oder 2, d a d u r c h
g e k e n n z e i c h n e t , daß Nitrifikation und Denitrifikation in derselben Festbettanordnung erfolgen,
in der abwechselnd oxische und anoxische Bedingungen hervorgerufen werden.

4.   Verfahren nach Anspruch 1, d a d u r c h   g e -
k e n n z e i c h n e t , daß die Denitrifikation in
einem anoxischen Becken durchgeführt wird, dem das Abwassergemisch aus einem anderen, belüfteten Becken zugeführt wird, in welchem die Nitrifikation mit Hilfe der
sessilen Schlammanlagerungen in einer weiteren Festbettanordnung erfolgt.

5.   Verfahren nach einem der vorangehenden Ansprüche,
d a d u r c h   g e k e n n z e i c h n e t , daß die
Festbettanordnung zur Erzeugung einer Strömung in ihren
Durchgängen in dem    Belebungsbecken bewegt wird.

6.   Verfahren nach einem der vorangehenden Ansprüche,
d a d u r c h   g e k e n n z   e i c h n e t , daß die
Festbettanordnung durch Beschleunigung und/oder Richtungsumkehr der Strömung in den Durchgängen gespült wird, wenn
die Schlammanlagerungen eine vorbestimmte Bewuchsmenge
überschreiten.

7.   Verfahren nach einem der vorangehenden Ansprüche,
d a d u r c h   g e k e n n z e i c h n et , daß die Festbettanordnung zum Spülen mit pulsierend wechselnder Geschwindigkeit bewegt wird.

8. Verfahren nach einem der vorangehenden Ansprüche, d a d u r c h   g e k e n n z e i c h n e t , daß eine Festbettanordnung aus kleinen freischwebend im Abwasser- gemisch verteilten porösen Schwimmkörpern oder hohlen Formstücken verwendet wird.

9. Verfahren nach Anspruch 8, d a d u r c h   g e - k e n n z e i c h n e t , daß die Schwimm- oder Schwebekörper in Käfigen gehalten werden.

10. Verfahren nach Anspruch 9, d a d u r c h   g e - k e n n z e i c h n e t , daß die Käfige zum Spülen der Schwebekörper hin und her und/oder auf und ab bewegt werden.

11. Verfahren nach einem der vorangehenden Ansprüche, d a d u r c h   g e k e n n z e i c h n e t , daß das Festbett aus einer rotierenden Trommel besteht.

12. Vorrichtung zum Durchführen des Verfahrens nach einem der Ansprüche 1 bis 11 mit einer Festbettanordnung insbesondere in Form von Beckeneinbauten, deren die Durchgänge bildenden Kanäle durch Wände mit einem gegenseitigen Abstand von etwa 2-20 cm begrenzt sind, d a d u r c h   g e k e n n z e i c h n e t , daß die Festbettanordnung (5,25,35') an einer von einem Motor (14) angetriebenen fahrbaren Brücke (4) und/oder sonstigen bewegbar geführten Halterung (26) montiert ist.

13. Vorrichtung nach dem Oberbegriff des Anspruchs 9, d a d u r c h   g e k e n n z e i c h n e t , daß die Wände der Kanäle der Beckeneinbauten zur Bildung von Strömungshindernissen perforiert sind.

14. Vorrichtung nach Anspruch 12 oder 13, d a d u r c h g e k e n n z e i c h n e t, daß die Beckeneinbauten (5) allgemein in Längsrichtung ihrer Kanäle horizontal in dem Becken (1) bewegbar sind.

15.    Vorrichtung nach Anspruch 12 oder 13, d a d u r c h g e k e n n z e i c h n e t , daß die vertikal durchströmte Festbettanordnung (25,35') auf und ab bewegbar an einer Hubvorrichtung (26) montiert ist, die ihrerseits an der horizontal bewegten Brücke (24,34) angebracht ist.

Fig.1

0162339

Fig. 2

0162339

Fig. 3

0162339

Europäisches
Patentamt

**EUROPÄISCHER RECHERCHENBERICHT**

0162339
Nummer der Anmeldung

EP 85 10 5150

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 430 919 (R.F. LEPAROUX) * Seite 7, Zeile 28 - Seite 8, Zeile 10; Seite 4, Zeilen 7-21; Figur 4 * | 1-3 | C 02 F 3/30 C 02 F 3/08 |
| | --- | | |
| X | US-A-4 159 945 (DRAVCO CORP.) * Spalte 2, Zeile 66 - Spalte 3, Zeile 55 * | 1 | |
| | --- | | |
| X | GMF-WASSER/ABWASSER, Band 124, Nr. 5, Mai 1983, Seiten 239-242, München, DE; M. HIROSE: "Ein neues System einer Kombination des Belebungsverfahrens mit sessilen Organismen auf Aufwuchsflächen" * Seite 239, Abschnitt 1, "Einleitung"; Seite 240, Abschnitt 2, "Verfahrensbeschreibung" und Abschnitt 3, "Anwendungsmöglichkeiten"; Abbildungen 1,2; Tabelle 2 * | 1,2,4 | RECHERCHIERTE SACHGEBIETE (Int. Cl.4)  C 02 F |
| | --- | | |
| A | US-A-4 200 532 (ISHIKAGI KIKO) * Spalte 2, Zeilen 48-66 * | 8-11 | |
| | --- | | |
| A | FR-A- 478 669 (G. POUJOULAT) * Seite 1, Zeile 56 - Seite 2, Zeile 5; Figur 4 * | 12,14 | |
| | ---           -/- | | |

Der vorliegende Recherchenbericht wurde für alle Patentansprüche erstellt

| Recherchenort DEN HAAG | Abschlußdatum der Recherche 25-07-1985 | Prüfer TEPLY J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

**Europäisches Patentamt**

# EUROPÄISCHER RECHERCHENBERICHT

EP 85 10 5150

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 177 147 (ROBERTS FILTER) * Spalte 4, Zeilen 20-39 * | 12,15 | |
| A | US-A-4 137 171 (ISHIGAKI KIKO) * Figuren 1,9 * | | |

RECHERCHIERTE SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 25-07-1985 | TEPLY J. |

KATEGORIE DER GENANNTEN DOKUMENTEN
X von besonderer Bedeutung allein betrachtet
Y von besonderer Bedeutung in Verbindung mit einer anderen Veröffentlichung derselben Kategorie
A technologischer Hintergrund
O nichtschriftliche Offenbarung
P Zwischenliteratur
T der Erfindung zugrunde liegende Theorien oder Grundsätze

E älteres Patentdokument, das jedoch erst am oder nach dem Anmeldedatum veröffentlicht worden ist
D in der Anmeldung angeführtes Dokument
L aus andern Gründen angeführtes Dokument
& Mitglied der gleichen Patentfamilie, übereinstimmendes Dokument